# EUROPEAN PATENT SPECIFICATION

(11) **EP 2 091 873 B1**
(45) Date of publication and mention of the grant of the patent: **25.02.2015**
(21) Application number: 07847949.0
(22) Date of filing: 06.12.2007
(51) Int. Cl.: C03B 13/01, C03B 13/06, C03B 13/08, E04C 2/54

(54) **PROCESS AND DEVICE FOR THE PRODUCTION OF CHANNEL-SECTION GLASS ELEMENTS**
VERFAHREN UND VORRICHTUNG ZUM HERSTELLEN VON PROFILGLASELEMENTEN
PROCÉDÉ ET DISPOSITIF POUR LA FABRICATION D'ÉLÉMENTS DE VERRE À SECTION EN U

(30) Priority: 08.12.2006 DE 102006058247
(43) Date of publication of application: 26.08.2009
(73) Proprietor: Bauglas Industrie GmbH, 66839 Schmelz / Saar (DE)
(72) Inventor: SCHEID, Nikolaus, 66663 Merzig (DE); SCHOEBEN, Herbert, 66620 Nonnweiler (DE); BRAUN, Thomas, 66265 Heusweiler (DE); CLAESGES, Christoph, 66740 Saarlouis (DE)
(74) Representative: Pettet, Nicholas Edward
(86) International application number: PCT/EP2007/063482
(87) International publication number: WO 2008/068324

(56) References cited:
- DE-A1- 1 496 047
- DE-A1- 1 496 416
- DE-B1- 2 134 047
- DE-U1- 29 809 176
- FR-A- 1 494 042
- GB-A- 854 154
- GB-A- 991 867
- US-A- 3 420 650

## Description

The invention relates to a process and a device for the production of channel-section glass elements with two flanges and a web formed between the latter.

Channel-section glass elements have long been used as light-transmitting (i.e. transparent or translucent) structural elements. The elongated standard channel-section glass elements have a U-shaped cross-section with a central web forming the base of the channel and having a typical width of about 20 - 50 cm and with flanges having a typical height of about 4 - 10 cm which follow on essentially at essentially right angles at the longitudinal edges of the web. The glass thickness typically amounts to about 5 - 10 mm. Channel-section glass elements are mainly used to close light openings in facades (external walls) of buildings, but also for glazings in the interior of buildings. As a rule, a plurality of channel-section glass elements are disposed beside one another with the interposition of a narrow sealing joint, which is closed with a sealant, e.g. on a silicone base. In order to improve the thermal insulation, channel-section glass elements are usually installed in pairs opposite one another thereby forming an intermediate air space.

The web and the flanges of standard channel-section glass elements are essentially flat and have on one or both surfaces a pattern in the form of an irregular fine structure (matting). The pattern, the profile depth whereof typically lies in the µm range, at all events amounting to significantly less than one millimetre, is imprinted with the aid of patterned rollers into the surface of the channel-section glass elements. It is applied primarily in order to conceal surface irregularities arising in production. A pattern (texture, ornament) can also be used for decorative purposes, to produce light scattering and/or to prevent direct vision through the channel-section glass elements. Channel-section glass elements with essentially clear through-vision and non-patterned surfaces are also known.

Channel-section glass elements are usually produced from the glass melt by a rolling process. A pair of cylindrical draw-in rollers disposed at the exit of a glass melting furnace gives rise to the formation of a flat glass ribbon having a thickness determined by the adjusted roller gap. A glass ribbon exiting such a draw-in roller pair provides of edges with fire-polished surfaces, i.e. surfaces produced and hardened from the melt without a mechanical contact to any forming means. In a subsequent annealing section, the glass ribbon is cooled in a controlled manner. Downstream, flange forming means, such as skid-shaped flange forming means, erect two flanges at the edges of the glass ribbon, usually at a right angle, as soon as the temperature of the glass ribbon has been sufficiently reduced and the glass ribbon has thus become mechanically stabilised. A pair of rollers for acting on the surfaces of the web, disposed behind the flange forming devices, can be used for further smoothing of the web. For this purpose, the smoothing rollers usually have smooth surfaces. DE 14 96 047 A1, DE 14 96 416 A1, DD 0 230 231 A3, for example, all disclose devices for the production of channel-section glass elements.

Insofar as mention is made here and below of "ahead of" or "behind" a device element, this positional indication relates in each case to the transport direction of the glass ribbon through the device, i.e. "ahead of" in the sense of "upstream" and "behind" in the sense of "downstream".

A completely different production process and device of the extrusion type wherein a channel-section glass element is formed directly from the glass melt by the use of non-cylindrical draw-in rollers having U-profiled cross sections is disclosed in GB 0 991 867. Channel-section glass elements produced by such extrusion process and device are mechanically weak and prone to breakage because all their surfaces and particularly their edges are unavoidably in mechanical contact with forming tools, i.e. rollers, during the production process. Such mechanical contact leads to minor surface quality, high residual mechanical stresses, low resistance to temperature gradients and low bending strength in the glass elements produced thereby, particularly in their edges. This makes them - because of the resulting low mechanical strength - unfeasible for use in most applications such as the glazing of building facades where high mechanical strength is needed. A number of profile sections, which are said to be principally producible by the specific extrusion process and device disclosed therein, are proposed. The channel-section glass elements however also suffer from having flanges with non-fire polished edge surfaces leading to poor mechanical quality. Extrusion processes, devices and products such as proposed in GB 0 991 867 more than 40 years ago have therefore not found acceptance in practice.

Channel-section glass elements have been widely tried and tested for the glazing of light openings of buildings. The light-scattering pattern of the glass surface(s) leads to a room illumination which is rendered uniform and to a de-reflection (matting) of the glass elements, the U-shaped cross-section and the fire-polished surfaces of the free flange edges basically providing the element with a good mechanical stability. However, the large number of clearly visible sealing joints required in a large light opening impairs the overall aesthetic impression, especially in the external view. The light scattering effect that can be achieved with the aid of patterns is also limited.

In order to achieve a marked light deflection effect of glazings, especially in the internal area of buildings, it has already been proposed to provide at least one of the surfaces of the web of channel-section glass elements with a fluted, prism-like cross-section (EP 1 066 445 B1). The susceptibility to breakage of such structural elements is however increased compared to channel-section glass elements having the same dimensions on account of the local thickness reduction and the sharp profile edges. The angular and deep troughs of the exposed surfaces of such structural elements also make cleaning difficult.

Channel-section glass elements with cross-sections differing from that of standard channel-section glass elements are described in DE 92 10 773 U1. This publication discloses channel-section glass elements for roofs of greenhouses, the flanges whereof either adjoin the web on both sides at a flange erection angle of significantly more than 90° or have at their ends a bent-off portion running roughly in parallel with the web, in order to improve the light yield in the edge region. The web of these channel-section glass elements can have one or more corrugation(s). Such unusual channel-section glass elements have not managed to establish themselves in practice for various reasons.

A problem underlying the invention is to make available channel-section glass elements that can be disposed beside one another with a reduced perceptibility of the sealing joint in the external view. The mechanical stability of the channel-section glass elements is aimed at being at least as good as, preferably better than for standard channel-section glass elements. Channel-section glass elements produced according to the invention, moreover, should preferably exhibit an at least equally great, preferably an improved, light scattering effect compared with standard channel-section glass elements. Finally, they should be producible in good quality using simple production means.

It is also a problem of the present invention to make available an improved simple and cost-effective process and a simply constructed device for the production of channel-section glass elements.

A process according to the invention is the subject-matter of claim 1.

A device according to the invention is the subject-matter of claim 8.

Preferred embodiments of the invention in the respective categories are the subject-matter of the sub-claims.

The advantageous effect of the inventive selective annealing of the web and the flanges, by which their temperatures are selectively adjusted to measurably differing values, according to claim 1, is that the web of the channel-section glass element is still sufficiently hot and so soft that it can adapt to the surface contour of the two web profiling rollers by plastic deformation and if necessary by flowing. At the same time, the flanges are cooled to a measurably lower flange temperature and as a result, after being folded up by the flange forming means, are already so dimensionally stable that they are already orientated essentially at right angles to the web during the profiling of the web and remain permanently in this orientation without becoming undesirably deformed again.

"Profiling", within the scope of the invention, means a thickness and/or profile change of the web, proceeding from the initially flat state, in the millimetre range, i.e. by more than about a tenth of the typical glass thickness of channel-section glass elements, i.e. more than about 0.5 mm, preferably with an amplitude of at least 1 mm. The "amplitude" is the peak-valley distance of adjacent profile minima and maxima.

In contrast, "patterning" (or texturing) is understood to mean a mere surface structuring or imprinting with amplitudes in the sub-millimetre range, i.e. below, preferably significantly below, 500 µm.

The selective annealing of web and flanges is carried out such that the flange temperature is adjusted to at least 10°C, preferably at least 30°C, more preferably 30 - 70°C, particularly about 50°C, below the web temperature. For this purpose, the flanges are preferably acted on directly or indirectly - e.g. indirectly by cooling the flange forming means - by cooling air in the region of the flange forming means and/or ahead of the latter.

In a preferred embodiment of the invention, the web is profiled on both surfaces, and particularly in a corrugated (wavy) form. Corrugations with rounded corrugation troughs and peaks and without pronounced steps or kinks are particularly preferred.

By using suitable web profiling rollers, the web is preferably profiled in such a way that its thickness remains essentially constant over its whole width (apart from the transition zones to the flanges). Weak points in the channel-section glass element caused by local thickness reductions are thus avoided, so that the mechanical loadability of the channel-section glass element as a whole is increased.

A web with an essentially constant thickness is produced by both web profiling rollers being provided with a matching surface contour, e.g. a corrugated contour, in the longitudinal section, the corrugation of the one web profiling roller being offset by a half corrugation length (= wavelength of the corrugated profile) with respect to the corrugation of the other web profiling roller.

According to another embodiment of the process, only one of the two surfaces of the web is profiled, in particular also in corrugated form. Such profiling preferably takes place on the outer side of the web facing away from the flanges. This can facilitate the separation of the channel-section glass elements into individual sections, the cutting device acting at a right angle to the longitudinal extension of the channel-section glass elements on the flat inner surfaces of the web and the flanges. The thickness variations of the web produced by the solely one-sided profiling produce a pronounced optical lens effect, which leads to a markedly locally-varying light deflection and thus to a very uniform room illumination in direct sunlight.

The web profiling automatically leads to at least one of the three following dimensions changing macroscopically:
- width of the web (distance of the flanges from one another);
- thickness of the web;
- height of the flanges.

With a preferred variant of the invention, the width of the web remains essentially constant during the, e.g., corrugated web profiling, whilst its thickness and the flange height are reduced. In this case, a portion of the flanges adjacent to the web is incorporated into the web during the web profiling. This variant of the invention permits a rapid switch-over of the production equipment from a phase in which standard channel-section glass elements with a flat, non-deformed web are produced to a phase in which inventive channel-section glass elements with a profiled web are produced. For this purpose, it is merely necessary for the width of the glass ribbon leaving the glass melting furnace by means of the draw-in rollers to be adapted, the selective annealing means to be activated and finally the smoothing rollers following the flange forming means to be exchanged for web profiling rollers for the web profiling.

It lies within the scope of the invention to introduce - in a manner known per se - a pattern into at least one of the two surfaces of the glass ribbon, preferably its underside, with at least one of the draw-in rollers.

Alternatively, or in addition, provision can be made such that a smoothing or patterning of a surface of the web is carried out with at least one of the web profiling rollers.

With the inventive device according to claim 8, the surfaces of the web profiling rollers are preferably formed and disposed in such a way that they enclose between them a continuous profiled roller gap, the size of the roller gap determining the final thickness of the web.

The surface of at least one, preferably both, of the web profiling rollers is preferably configured corrugated in the longitudinal section, in particular roughly sinusoidal. "Sinusoidal" is not to be understood in the strict mathematical sense, but denotes within the scope of invention steady corrugations with round-shaped peaks and troughs following one another alternately, without any steps or kinks.

The corrugation length of the corrugation(s) in the surface of the web profiling roller(s) and of the resulting webs preferably lies between 10 and 50 mm, in particular between 20 and 40 mm, the amplitude of the corrugation of the web profiling rollers preferably amounts to between 1 and 10 mm, in particular between 2 and 6 mm. Larger corrugation lengths and smaller amplitudes are less suitable for concealing the sealing joint between adjacent channel-section glass elements, smaller corrugation lengths and larger amplitudes are more difficult to produce.

It is preferable within the scope of the invention for the surface contours of both web profiling rollers to be essentially uniform over their width. In the case of corrugated contours, this means that the corrugation lengths and amplitudes are essentially constant over the whole width of the web profiling rollers acting on the web.

In another variant of the invention, the amplitude and/or the corrugation length of the corrugated surface contour of the two web profiling rollers varies over the width of the web profiling rollers, so that for example the corrugation length increases or diminishes from the centre of the web profiling rollers outwards.

Alternatively, provision can be made such that the surface contour of the web profiling rollers is configured as a "stepped" corrugation, the corrugation troughs, the corrugation peaks and/or the regions lying in between being configured as essentially flat web sections, which lie adjacent to neighbouring web sections at web section angles. In order to obtain a flat web profile that is not too angular, care must be taken to ensure that the web section angles between two neighbouring web sections do not diverge extremely from 180°, in particular lie between 180° and 90°, in particular lie above 120° and preferably above 150°.

The lengths of the web sections may be constant, but it is also feasible for their lengths to vary, and indeed among one another and/or over the length extension (width) of the web profiling rollers. If the web is to have essentially the same glass thickness over its whole width, the stepped corrugations of the two web profiling rollers must be closely matched to one another. In the case of corrugations with constant corrugation length and amplitude over the whole width of the web profiling rollers, this means a shifting of the respective corrugations by half a corrugation length, so that corrugation troughs of one roller correspond to corrugation peaks of the opposed roller.

In the device according to the invention, the devices for the selective annealing of the flanges of the glass ribbon are laterally disposed cooling air blowing nozzles, which are directed from the edge of the glass ribbon towards the centre of the glass ribbon.

Wide-slot nozzles for blowing cooling air onto the web, disposed above and/or below the glass ribbon, have proved to be suitable for the devices for the selective annealing of the web of the glass ribbon.

Alternatively, or in addition, provision can be made such that the devices for the selective annealing of the web of the glass ribbon and/or of its flanges comprise liquid-cooled cooling means disposed above and/or below the glass ribbon.

It goes without saying that cooled or heated rollers acting on the glass ribbon can also contribute to its selective annealing in the area of the annealing section.

If, in addition to the inventive profiling of the web, patterning of the glass ribbon forming the channel-section glass element is desired, at least one of the draw-in rollers, preferably the lower draw-in roller, may have a patterned surface.

Provision can be made such that at least one of the web profiling rollers is configured as a smoothing roller for one of the surfaces of the web. The surface - apart from any surface contour used for the profiling - is formed as smooth as possible for this purpose. It goes without saying that, conversely, the web profiling rollers may be patterned in addition to the inventive profiling contour.

A channel-section glass element is preferably configured such that the thickness of the web is constant over its whole width (apart from the transition zones to the flanges).

It is preferably formed in such a way that the corrugation length of the corrugations of the web amounts to 10 to 50 mm, preferably about 20 to 40 mm.

A value of 1 to 10 mm, preferably 2 to 6 mm, is preferably adjusted for the amplitude (= peak-to-valley distance between adjacent corrugation peaks and corrugation troughs) of the corrugations of the web.

A channel-section glass element, wherein the web has an essentially sinusoidal cross-section with corrugation peaks and corrugation troughs following one another uniformly and without any stepped or angular transition, is particularly easy to produce and stable and mechanically strong.

Alternatively, the webs may have a stepped cross-section with essentially flat web sections abutting against one another at a web section angle of less than 180° and more than 90°, preferably at least 120°, in particular at least 150°.

With regard to ease of production, illumination properties and mechanical stability, it is particularly preferable for the corrugation length of the web corrugations to be at least five times as large, e.g. five to fifteen times, particularly about ten times as large, as the amplitude of the corrugations.

The length (wavelength) of the corrugations of the web is preferably essentially constant over its whole width (apart from narrow transition zones from the web to the flanges which are subjected to particular deformation conditions).

Alternatively, the corrugation length of the web corrugations may vary over its width, particularly in that the corrugation length of the web corrugation diminishes from the centre of the web towards the flanges. In such case the ratio of corrugation length to amplitude remains nevertheless preferably along the whole web width in the range of at least about five and preferably in the range of five to fifteen, most preferably at about 10.

By setting the ratio of corrugation length to amplitude of the web corrugations to a value of at least five representing a relatively flat and smooth web profile, significant advantages are achieved as compared to steeper profiles: Not only is cleaning of such channel-section glass elements much easier than for steeper profiles having a lower ratio of corrugation length to amplitude, but more important channel-section glass elements having such relatively flat web profiles tend to be mechanically more stable. The best mechanical and optical performance of channel-section glass elements may be achieved if the ratio of corrugation length to amplitude of the web corrugations is at least about 5, preferably in the range of about 5 - 15, most preferably at about 10.

Channel-section glass elements produced according to the invention are very particularly well suited for use as the glazing of building facades, a plurality of - particularly vertically orientated - channel-section glass elements being disposed adjacent to one another in parallel and with the interposition of a sealing joint to be filled with sealant. Surprisingly, the channel-section glass elements produced according to the invention with their profiled web, in particular profiled in a corrugated form, render the sealing joints virtually non-visible, at least when observed from a certain distance, said sealing joints being able to be adjusted so as to be narrow on account of the flanges orientated at right angles to the web. They tend to be, moreover, mechanically more stable than standard channel-section glass elements having essentially the same dimensions.

The production of channel-section glass elements takes place according to the invention as described below.

With the aid of two cylindrical draw-in rollers disposed at the exit of a glass melting furnace and enclosing a roller gap between them, an essentially flat, but still soft glass ribbon having edges with a fire-polished surface is made available with a thickness pre-determined by the appropriate adjustment of the roller gap. The glass melt may be produced in any glass melting furnace known from the prior art. As a glass, use is usually made of soda-lime-silicate glasses, which if need be can have colouring additives. The invention is however not limited to such glass types. Both draw-in rollers usually have the same diameter and the same width, but they may differ from one another in their dimensions.

Advantageously, at least one of the draw-in rollers, in particular the lower draw-in roller, has a patterned surface, with which the surface(s) of the glass ribbon coming into contact with it, particularly its lower surface, is patterned, i.e. provided with a surface structure in the sub-millimetre range. As is common with standard channel-section glass elements, the draw-in roller concerned may particularly have a surface that is regularly or irregularly structured in the micrometer range - produced for example by sandblasting, imprinting or laser processing, by means of which the glass ribbon acquires a structured surface having a matted character in reflection and a translucent to transparent character in through-vision.

The glass ribbon thus produced is subsequently cooled in a controlled manner in an annealing section, in which the glass ribbon is supported by conveyor rolls, a gas cushion, or the like. The controlled cooling of the glass ribbon in the annealing section takes place, e.g., by means of one or more wide-slot nozzles extending transversely over the glass ribbon, said nozzles being disposed particularly above the glass ribbon, and/or by means of liquid-cooled cooling means, which may be disposed, e.g., between the conveyor rolls or inside a gas cushion element.

Unlike in the production of standard channel-section glass elements, a selective annealing of the subsequent web and the subsequent flanges is carried out according to the invention in the area of the annealing section, such that the web temperature during the subsequent web profiling is measurably higher than the flange temperature. In the exemplary case of a standard channel-section glass composition of the soda-lime-silicate glass type, the web temperature may be adjusted for this purpose in accordance with the invention to about 750 °C (instead of about 700 °C in the production of standard channel-section glass elements) before the web profiling step, whilst the average flange temperature is at the same time adjusted to a value which is significantly lower by about 50°C, i.e. to about 700 °C. The absolute temperatures required for other glass compositions may differ from these values depending on the type of glass; they may however be easily determined by simple tests.

Behind the annealing section, the edges of the glass ribbon are erected to form flanges by means of suitable flange forming means, e.g. with the aid of skids (as known in the art) or with the aid of rollers, said flanges enclosing the web between them. The selective annealing of web and flanges is continued in the area of the flange forming means. For this purpose, the skids bringing about the erection of the flanges may be cooled by blasting with cooling air, which in turn indirectly brings about cooling of the flanges being erected. Instead of or in addition to the described cooling means, local heating of areas of the glass ribbon may take place in order to prevent a drop in the web temperature and/or the flange temperature below the aforementioned target values.

After the erection of the flanges and immediately before the web profiling, the web temperature is adjusted to a value at which profiling of the web is still possible, and the flange temperature is at a value lying significantly below the latter, at which the flanges are sufficiently dimensionally stable.

The web profiling according to the invention usually follows on directly from the erection of the flanges by means of the flange forming means. Within the scope of the invention, a pair of web profiling rollers disposed above and below the glass ribbon and enclosing a roller gap between them acts for this purpose on the web, which is at the higher web temperature, is plastically deformable and still sufficiently flowable under roller pressure for the profiling, and profiles the latter corresponding to the surface profile of the web profiling rollers. At this time, the flanges of the channel-section glass element have already cooled down to an extent such that a significant undesired deformation thereof needs no longer be feared.

The selective annealing of the flanges and the web according to the invention therefore makes it possible for web profiling to be carried out without the flanges having to be held in their shape and orientation produced by the flange forming means with costly devices.

Mechanical contact between the edges of the glass ribbon and of the flanges with any forming tool is not necessary or advisable at any stage of the production process, so that the flanges of the final channel-section glass element still has free longitudinal edges with fire-polished surfaces that contribute to its high mechanical stability and resistance to breakage.

The selective annealing of the channel-section glass element before the web profiling and before or during the flange forming makes it possible to produce the glass ribbon at a higher speed, since there is no need to fear that the flanges will deform on account of centrifugal forces, even if said flanges have a relatively high mass.

Following the web profiling, the flanges and the web are cooled down in a controlled manner such that an unintentional freezing of stresses in the channel-section glass element is prevented. The still present non-uniform temperature distribution of the channel-section glass element following the web profiling makes it necessary for the web to be cooled down more intensively than the flanges at the start of the cooling process, until the web temperature has approached the flange temperature.

It is possible to provide the channel-section glass element, after the web profiling, in a known manner with one or more coatings, e.g. based on lacquers or with a pyrolytic solar control coating on a metal oxide base. The coating is preferably applied on the inner sides of the web and/or the flanges.

It is also possible to introduce in the region of the web and/or the flanges a wire insert into the glass ribbon, which wire insert is unrolled from a suitably disposed supply roll and immersed into the glass melt ahead of the draw-in rollers, so that the wire is embedded in the glass behind the draw-in rollers.

The inventive process and the inventive device as well as channel-section glass elements are explained in greater detail below with the aid of the drawing. In the drawing:
- **Fig. 1**: shows a schematic side view, not to scale, of a device according to the invention for the production of channel-section glass elements;
- **Fig. 2**: shows a plan view of the device according to Fig. 1;
- **Fig. 3**: shows a cross-section through the device of Fig. 1 and 2 in the region of the web profiling rollers, according to section A-A in Fig. 2;
- **Fig. 4**: shows a schematic cross-section, not to scale, through two channel-section glass elements produced according to the invention disposed adjacent one another with the interposition of a sealing joint in a first embodiment; and
- **Fig. 5**: shows a cross-section through a second embodiment of channel-section glass elements produced according to the invention with a detail enlargement.

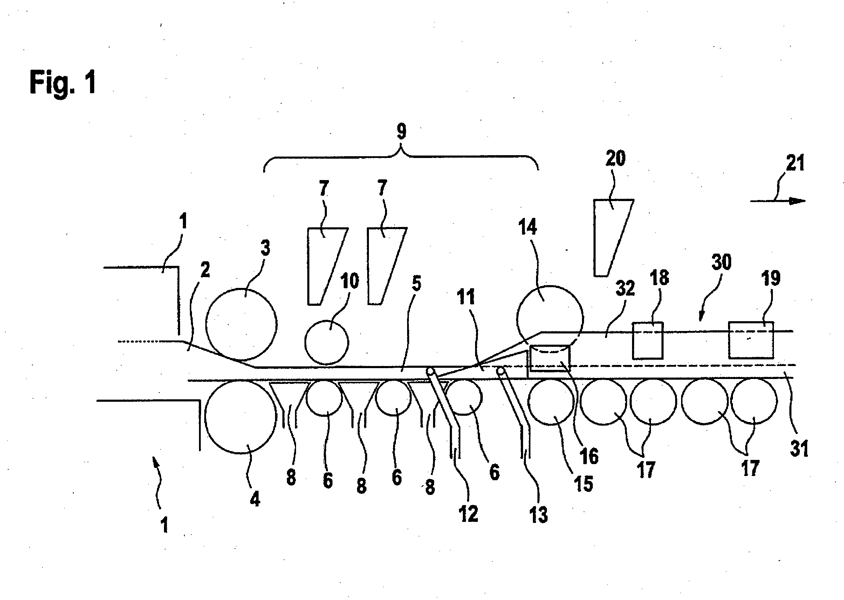

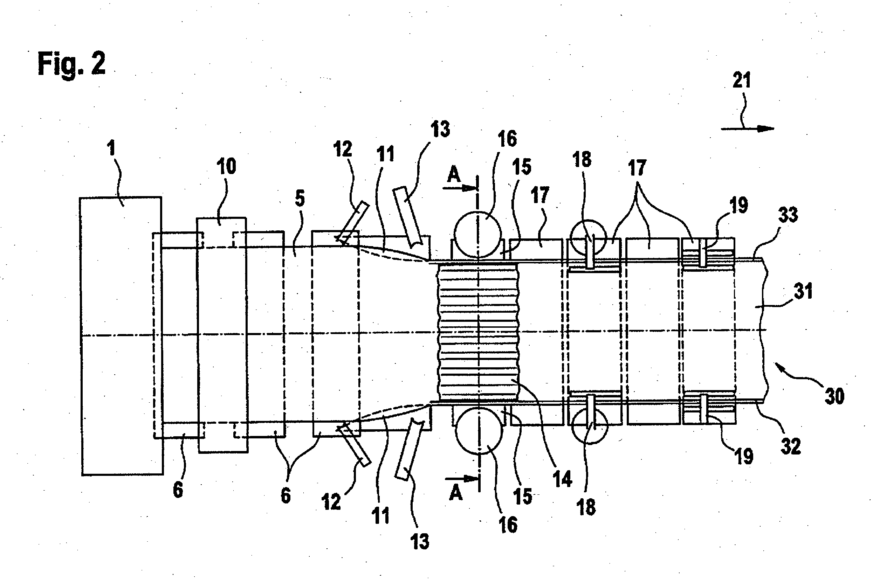

**Fig. 1** shows a side view of an embodiment of an inventive device for the production of channel-section glass elements, whilst **Fig. 2** represents the same device in plan view.

Two cylindrical draw-in rollers 3, 4 having the same diameter and being arranged one above the other, thereby leaving a roller gap with an essentially constant width, are disposed at the exit of a glass melting furnace 1 of standard design in which a glass melt 2 is produced, said glass melting furnace being indicated solely in outline in Fig. 1, 2. An essentially flat, but still soft glass ribbon 5 of a pre-determined thickness is made available (drawn from the melt) by means of draw-in rollers 3, 4. Lower draw-in roller 4 has an irregular surface structure (pattern) which is transferred to the lower surface of glass ribbon 5.

Glass melt 2 of standard soda-lime-silicate glass has a temperature in the order of magnitude of about 1100 °C ahead of draw-in rollers 3, 4.

Draw-in rollers 3, 4 are followed by an annealing section 9, through which glass ribbon 5 is transported on a plurality of conveyor rollers 6. Disposed above glass ribbon 5 are two wide-slot nozzles 7 extending at right angles to glass ribbon 5, through which nozzles cooling air is blown in a controlled manner onto glass ribbon 5. Liquid-cooled cooling means 8 for selective radiation cooling of glass ribbon 5 are also disposed from beneath between conveyor rollers 6 inside annealing section 9.

In the embodiment shown, there is provided inside annealing section 9 above one of conveyor rollers 6 a smoothing roller 10 with a smooth surface, with which glass ribbon 5 can be smoothed, stabilised and cooled.

Installed at the end of annealing section 9 and spaced from the draw-in rollers 3, 4 are flange forming means 11 in the form of skids running at an angle to the edge of glass ribbon 5 for the purpose of erecting flanges 32, 33 at the edges of glass ribbon 5. Flange erection angle 34 of flanges 32, 33 and their height can be influenced by the position and the shape of flange forming means 11. Flange forming means 11 only act upon the surfaces of the glass ribbon 5 and do not have any mechanical contact with the free edges of the flanges they form. Other flange forming means such as, e.g., a sequence of rolls may alternatively be used.

Disposed directly ahead of flange forming means (skids) 11 on each side of glass ribbon 5 are two cooling air blowing nozzles 12, 13, which blow cooling air against the edge of glass ribbon 5 (nozzle 12) and against skids 11 coming into contact with flanges 32, 33 being erected (nozzle 13) and which, according to the invention, bring about, on the one hand, a selective annealing of flanges 32, 33 and, on the other hand, of web 31 of glass ribbon 5. The effect of the selective cooling of the edge of glass ribbon 5 by means of cooling air blowing nozzles 12, 13 is that, after the erection of flanges 32, 33, the average flange temperature is adjusted significantly below the average web temperature, i.e. at least about 10°C, preferably at least 30°C, most preferably about 30 - 70°C, particularly about 50°C.

Annealing section 9 and flange forming means 11 are followed by a pair of horizontal web profiling rollers 14, 15, with which web 31 can be profiled, in particular, formed having a corrugated cross-section. The diameter of upper web profiling roller 14 in the exemplary embodiment shown is larger than that of lower web profiling roller 15. Alternatively, lower web profiling roller 15 may be wider than upper web profiling roller 14.

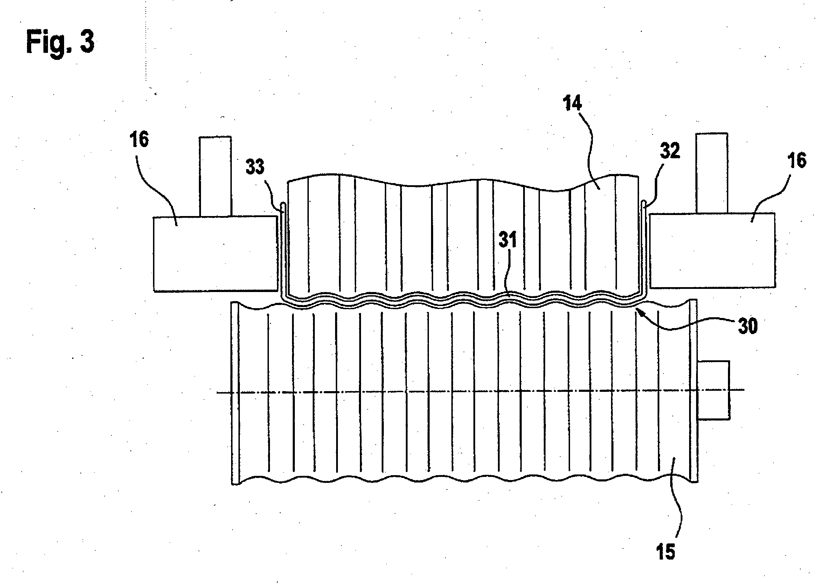

**Fig. 3** shows, thereby supplementing Fig. 1 and 2, the region of web profiling rollers 14, 15 in an enlarged form and in cross-section A-A of Fig. 2, only a lower part of upper web profiling roller 14 being shown. It can be seen that both web profiling rollers 14, 15 have a corrugated, i.e. an essentially sinusoidal, surface contour in the longitudinal section and are disposed such that they enclose between them a continuous roller gap. The corrugation length of the surface contour of the two web profiling rollers 14, 15 is identical, as is their amplitude; their corrugations are offset with respect to one another by half a corrugation length, so that the roller gap has an essentially constant thickness over the whole width of web 31. Located in the roller gap is web 31 of channel-section glass element 30, the web already being sinusoidally profiled by web profiling rollers 14, 15, said channel-section glass element further comprising essentially flat flanges 32, 33 following on from web 31 on both sides at a right angle flange erection angle 34.

Adjacent to the flanges 32, 33 and facing their surfaces flange guide rolls 16 with vertical rotary axes and a large diameter are provided, by which means it is possible to prevent flanges 32, 33 just formed from tilting outwards.

As can be seen from Fig. 1 and 2, web profiling rollers 14, 15 are followed by a zone in which the just-formed channel-section glass element 30 is transported on further conveyor rollers 17 and is thermally and mechanically stabilised and prepared for the controlled cooling and mechanical stress relaxation in the following (not shown) elongated annealing lehr 21.

In addition, further flange guide means 18, 19 are initially provided in order to secure flanges 32, 33 against occasional non-intentional deformation. In the first case, said flange guide means comprise a guide roll of small diameter and a guide skid (flange guide means 18), which enclose flanges 32, 33 on both sides between them - in a normally contactless manner. In the second case, they comprise two guide skids (flange guide means 19) enclosing the flanges between them and usually also slightly spaced apart from the latter. In addition, there is disposed above glass ribbon 5 a further wide-slot nozzle 20, which blows cooling air into the interior of channel-section glass element 30 and ensures that the initially still higher web temperature approaches the flange temperature.

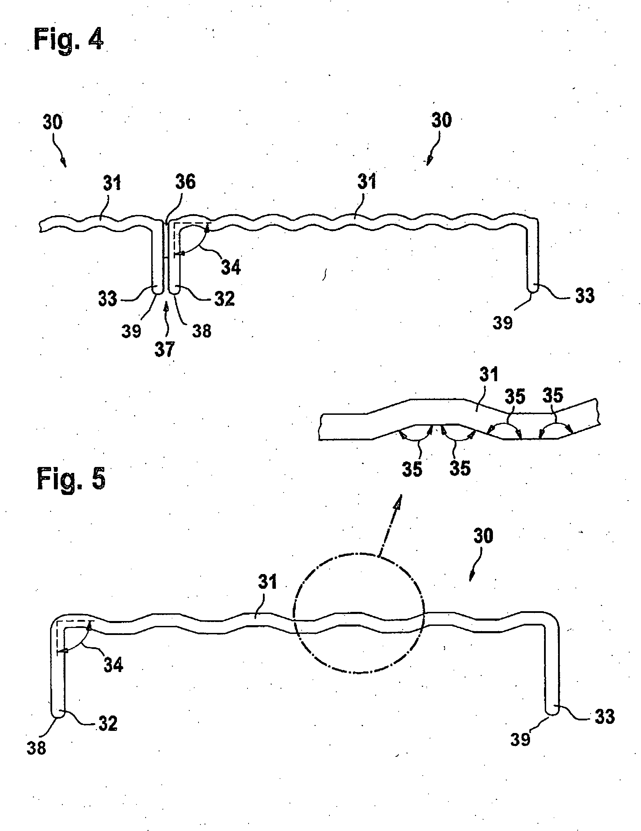

**Fig. 4** shows in cross-section two channel-section glass elements 30 according to a first embodiment, represented respectively completely and partially. The two essentially identical channel-section glass elements 30 are arranged adjacent to one another with their flanges 32, 33, a narrow sealing joint 37 filled with a sealant 36 (e.g. on a silicone base) remaining between them. Flanges 32, 33 of channel-section glass elements 30 enclose in each case a right angle flange erection angle 34 with web 31 which joins them. Their free edges 38, 39 have a fire-polished surface resulting in a high mechanical quality of the whole glass element 30, e.g. low tendency to break on bending or other mechanical loads, i.e. have not been in mechanical contact with forming tools during production.

Web 31 is corrugated, i.e. formed roughly sinusoidal and stepless. In the exemplary embodiment represented schematically and not to scale, its corrugation length over the whole web width lies at about 30 mm, its average amplitude (apart from the transition zones between web 31 and flanges 32, 33) at about 3 mm. The width of channel-section glass element 30 amounts to about 26 cm, the height of flanges 32, 33 lies at about 55 mm, the glass thickness at about 7 mm. Channel-section glass elements with such dimensions and profile shapes have been tried and tested in practice. They permit the optical concealment of the sealing joint, can be easily produced, possess a high mechanical stability and lead to a very uniform room illumination.

It can be seen that only a narrow sealing joint 37 is required as a result of the inventive shape of webs 31 and the right-angled arrangement of flanges 32, 33. Furthermore, as a result of the corrugated shape of webs 31 with flat and elongated corrugations of the two channel-section glass elements 30 disposed beside one another, sealing joint 37 is in any case concealed from a certain distance, so that channel-section glass elements 30 disposed beside one another lie adjacent to one another apparently jointless. This optical impression is further promoted if a transparent or translucent sealant 36 is used.

Channel-section glass element 30 is therefore particularly well suited for the glazing of the facades of buildings, a plurality of channel-section glass elements 30 being disposed adjacent to one another in parallel and with the interposition of a sealing joint 37.

**Fig. 5** shows a cross-section and a detail enlargement of a second embodiment of a channel-section glass element 30. Channel-section glass element 30 shown comprises two flanges 32, 33, having free edges 38, 39 with fire-polished surfaces, and at right angles thereto a web 31 disposed between the latter. Web 31, as in the first embodiment shown in Fig. 4, is configured in corrugated form, but in this case the corrugations are configured in a stepped fashion. The corrugation troughs, the corrugation peaks and the web sections of the stepped corrugations of web 31 connecting the latter are configured as web sections essentially flat in cross-section, each web section having roughly the same length in the example shown. The web sections lie adjacent to one another at web section angle 35. Web section angle 35 in this embodiment is about 160°, so that a flat and elongated surface profile results.

Further possibilities for modification arise within the scope of the inventive idea. Shaped channel-section glass elements 30 may be subjected to a thermal or chemical toughening treatment in order to increase further the resistance to breakage and/or to achieve improved safety properties, may be laminated with further elements, coated or otherwise enhanced. While usually channel-section glass elements provide of two flanges the invention may also be applied to L-shaped channel-section glass elements having only one flange.

## Claims

1. Process for the production of a channel-section glass element (30) with two flanges (32, 33) and a web (31) formed between the flanges (32, 33), comprising the steps:
a) making available a flat glass ribbon (5) by means of two cylindrical draw-in rollers (3, 4) disposed at the exit of a glass melting furnace (1),
b) adjusting the temperature of the web (31) to a web temperature at which the web (31) is still plastically deformable,
c) adjusting the temperature of the flanges (32, 33) to a flange temperature which is at least 10 °C, preferably at least 30 °C, lower than the web temperature,
d) thereafter, erecting the flanges (32, 33) at the edges of the glass ribbon (5) using flange forming means (11),
e) thereafter, profiling the web (31) with the aid of two web profiling rollers (14, 15),
f) finally, cooling the channel-section glass element (30).

2. Process according to claim 1, **characterised in that** the flange temperature is adjusted to 30 - 70 °C, preferably about 50 °C, below the web temperature.

3. Process according to any of claims 1 or 2, **characterised in that** the flanges (32, 33) are acted on directly or indirectly with cooling air in the region of the flange forming means (11) and/or ahead of the latter.

4. Process according to any of the preceding claims, **characterised by** profiling the web (31) on both surfaces.

5. Process according to claim 4, **characterised by** profiling the web (31) in a corrugated form.

6. Process according to any of claims 1 to 3, **characterised by** profiling only one of the two surfaces of the web (31).

7. Process according to claim 6, **characterised by** profiling said one surface of the web (31) in a corrugated form.

8. Device for the production of channel-section glass elements (30) from a glass melt (2), comprising:
o two cylindrical draw-in rollers (3, 4) for the formation of a flat glass ribbon (5), said draw-in rollers (3, 4) being disposed at the exit of a glass melting furnace (1),
o flange forming means (11), located behind the draw-in rollers (3, 4), for erecting two flanges (32, 33) at the edges of the glass ribbon (5),
o two rollers for acting on the web (31), said rollers being disposed behind the flange forming means (11),
**characterised in that**,
o behind the draw-in rollers (3, 4) and ahead of the flange forming means (11) and/or in the region thereof, devices (12, 13, 7, 8) are provided for the selective annealing of the web (31) and of the flanges (32, 33) of the glass ribbon (5) and comprising cooling air blowing nozzles (12, 13) disposed adjacent to said glass ribbon (5), which nozzles are directed from the edge of the glass ribbon (5) towards its centre, such that the temperature of the flanges (32, 33) is lower than the web temperature, that
o the two rollers disposed behind the flange forming means (11) are web profiling rollers (14, 15) for profiling the web (31), and that
o the surface of at least one of the web profiling rollers (14, 15) is configured in a corrugated form in the longitudinal section.

9. Device according to claim 8, **characterised in that** the surfaces of both web profiling rollers (14, 15) are configured in a corrugated form in the longitudinal section.

10. Device according to any of claims 8 or 9, **characterised in that** the devices for the annealing of the web (31) of the glass ribbon (5) comprise wide-slot nozzles (7) for blowing cooling air onto the web (31), said nozzles being disposed above and/or below the glass ribbon (5).

11. Device according to any of claims 8 to 10, **characterised in that** the devices for the selective annealing of the web of the glass ribbon (5) and/or its flanges (32, 33) comprise cooling means (8), preferably liquid-cooled, disposed above and/or below the glass ribbon (5).

## Patentansprüche

1. Verfahren zum Herstellen eines Profilglaselements (30) mit zwei Flanschen (32, 33) und einem zwischen den Flanschen (32, 33) ausgebildeten Steg (31), das die folgenden Schritte umfasst:
a) Bereitstellen eines flachen Glasbandes (5) mit Hilfe von zwei am Auslass eines Glasschmelzofens (1) angeordneten zylindrischen Einzugswalzen (3, 4),
b) Einstellen der Temperatur des Stegs (31) auf eine Stegtemperatur, bei der der Steg (31) noch plastisch verformbar ist,
c) Einstellen der Temperatur der Flansche (32, 33) auf eine Flanschtemperatur, die mindestens 10 °C und vorzugsweise mindestens 30 °C niedriger ist als die Stegtemperatur,
d) anschließendes Aufstellen der Flansche (32, 33) an den Kanten des Glasbandes (5) mit Hilfe von Flanschformungsmitteln (11),
e) anschließendes Profilieren des Stegs (31) mit Hilfe von zwei Stegprofilierungswalzen (14, 15),
f) schließlich Abkühlen des Profilglaselements (30).

2. Verfahren nach Anspruch 1, **dadurch gekennzeichnet, dass** die Flanschtemperatur auf 30 - 70 °C und vorzugsweise etwa 50 °C unterhalb der Stegtemperatur eingestellt wird.

3. Verfahren nach Anspruch 1 oder 2, **dadurch gekennzeichnet, dass** Kühlluft im Bereich der Flanschformungsmittel (11) und/oder vor diesen direkt oder indirekt auf die Flansche (32, 33) einwirkt.

4. Verfahren nach einem der vorangehenden Ansprüche, **gekennzeichnet durch** Profilieren des Stegs (31) auf beiden Oberflächen.

5. Verfahren nach Anspruch 4, **dadurch gekennzeichnet, dass** der Steg (31) in Wellenform profiliert wird.

6. Verfahren nach einem der Ansprüche 1 bis 3, **dadurch gekennzeichnet, dass** nur eine der beiden Oberflächen des Stegs (31) profiliert wird.

7. Verfahren nach Anspruch 6, **dadurch gekennzeichnet, dass** die eine Oberfläche des Stegs (31) in Wellenform profiliert wird.

8. Vorrichtung für die Herstellung von Profilglaselementen (30) aus der Glasschmelze (2), die aufweist:
o zwei zylindrische Einzugswalzen (3, 4) zur Herstellung eines flachen Glasbandes (5), die am Auslass eines Glasschmelzofens (1) angeordnet sind,
o Flanschformungsmittel (11), die hinter den Einzugswalzen (3, 4) angeordnet sind, um zwei Flansche (32, 33) an den Rändern des Glasbandes (5) aufzustellen,
o zwei hinter den Flanschformungsmitteln (11) angeordnete Walzen zur Einwirkung auf den Steg (31),
**dadurch gekennzeichnet, dass**
o hinter den Einzugswalzen (3, 4) und vor den Flanschformungsmitteln (11) und/oder in deren Bereich Vorrichtungen (12, 13, 7, 8) zum selektiven Temperieren des Stegs (31) und der Flansche (32, 33) des Glasbandes (5) angeordnet sind, die Kühlluftblasdüsen (12, 13) aufweisen, die benachbart zu dem Glasband (5) angeordnet sind, wobei die Düsen vom Rand des Glasbandes (5) in Richtung zur Mitte des Glasbandes ausgerichtet sind, sodass die Temperatur der Flansche (32, 33) niedriger als die Stegtemperatur ist,
o die zwei hinter den Flanschformungsmitteln (11) angeordneten Walzen Stegprofilierungswalzen (14, 15) zur Profilierung des Stegs (31) sind, und
o die Oberfläche von zumindest einer der Stegprofilierungswalzen (14, 15) im Längsschnitt wellenförmig ausgebildet ist.

9. Vorrichtung nach Anspruch 8, **dadurch gekennzeichnet, dass** die Oberflächen beider Stegprofilierungswalzen (14, 15) im Längsschnitt wellenförmig ausgebildet sind.

10. Vorrichtung nach einem der Ansprüche 8 oder 9, **dadurch gekennzeichnet, dass** die Vorrichtungen zum Temperieren des Stegs (31) des Glasbandes (5) Breitschlitzdüsen (7) aufweisen, um Kühlluft auf den Steg (31) zu blasen, wobei die Düsen oberhalb und/oder unterhalb des Glasbandes (5) angeordnet sind.

11. Vorrichtung nach einem der Ansprüche 8 bis 10, **dadurch gekennzeichnet, dass** die Vorrichtungen zum selektiven Temperieren des Stegs des Glasbandes (5) und/oder seiner Flansche (32, 33) Kühleinrichtungen (8) umfassen, die vorzugsweise flüssigkeitsgekühlt sind und die oberhalb und/oder unterhalb des Glasbandes (5) angeordnet sind.

## Revendications

1. Procédé pour la production d'un élément de verre à section en U (30) avec deux rebords (32, 33) et une bande (31) formée entre les rebords (32, 33), comprenant les étapes consistant à :
a) rendre un ruban de verre plat (5) disponible au moyen de deux rouleaux d'entraînement cylindriques (3, 4) disposés à la sortie d'un four de fusion de verre (1),
b) ajuster la température de la bande (31) à une température de bande à laquelle la bande (31) est toujours plastiquement déformable,
c) ajuster la température des rebords (32, 33) à une température de rebord qui est d'au moins 10°C, de préférence d'au moins 30°C, inférieure à la température de bande,
d) ensuite, dresser les rebords (32, 33) au niveau des bords du ruban de verre (5) en utilisant des moyens de formage de rebord (11),
e) ensuite, profiler la bande (31) à l'aide de deux rouleaux de profilage de bande (14, 15),
f) enfin, refroidir l'élément de verre à section en U (30).

2. Procédé selon la revendication 1, **caractérisé en ce que** la température de rebord est ajustée à 30 - 70°C, de préférence environ 50°C, au-dessous de la température de bande.

3. Procédé selon l'une quelconque des revendications 1 ou 2, **caractérisé en ce que** les rebords (32, 33) sont mis directement ou indirectement en oeuvre avec l'air de refroidissement dans la région des moyens de formage de rebord (11) et/ou devant ces derniers.

4. Procédé selon l'une quelconque des revendications précédentes, **caractérisé par** l'étape consistant à profiler la bande (31) sur les deux surfaces.

5. Procédé selon la revendication 4, **caractérisé par** l'étape consistant à profiler la bande (31) selon une forme ondulée.

6. Procédé selon l'une quelconque des revendications 1 à 3, **caractérisé par** l'étape consistant à profiler une seule des deux surfaces de la bande (31).

7. Procédé selon la revendication 6, **caractérisé par** l'étape consistant à profiler ladite une surface de la bande (31) selon une forme ondulée.

8. Dispositif pour produire des éléments de verre à section en U (30) à partir d'un verre en fusion (2), comprenant :
∘ deux rouleaux d'entraînement cylindriques (3, 4) pour la formation d'un ruban de verre plat (5), lesdits rouleaux d'entraînement (3, 4) étant disposés à la sortie d'un four de fusion de verre (1),
∘ des moyens de formage de rebord (11), positionnés derrière les rouleaux d'entraînement (3, 4) pour dresser deux rebords (32, 33) au niveau des bords du ruban de verre (5),
∘ deux rouleaux pour mettre en oeuvre la bande (31), lesdits rouleaux étant disposés derrière les moyens de formage de rebord (11),
**caractérisé en ce que** :
∘ derrière les rouleaux d'entraînement (3, 4) et devant les moyens de formage de rebord (11) et/ou dans leur région, on prévoit des dispositifs (12, 13, 7, 8) pour le recuit sélectif de la bande (31) et des rebords (32, 33) du ruban de verre (5) et comprenant des buses de soufflage d'air de refroidissement (12, 13) disposées de manière adjacente audit ruban de verre (5), lesquelles buses sont dirigées à partir du bord du ruban de verre (5) vers son centre, de sorte que la température des rebords (32, 33) est inférieure à la température de bande, **en ce que** :
∘ les deux rouleaux disposés derrière les moyens de formage de rebord (11) sont des rouleaux de profilage de bande (14, 15) pour profiler la bande (31), et **en ce que** :
∘ la surface d'au moins l'un des rouleaux de profilage de bande (14, 15) est configurée selon une forme ondulée dans la section longitudinale.

9. Dispositif selon la revendication 8, **caractérisé en ce que** les surfaces des deux rouleaux de profilage de bande (14, 15) sont configurées selon une forme ondulée dans la section longitudinale.

10. Dispositif selon l'une quelconque des revendications 8 ou 9, **caractérisé en ce que** les dispositifs pour le recuit de la bande (31) du ruban de verre (5) comprennent des buses à large fente (7) pour souffler l'air de refroidissement sur la bande (31), lesdites buses étant disposées au-dessus et/ou au-dessous du ruban de verre (5).

11. Dispositif selon l'une quelconque des revendications 8 à 10, **caractérisé en ce que** les dispositifs pour le recuit sélectif du ruban de verre (5) et/ou de ses rebords (32, 33) comprennent des moyens de refroidissement (8), de préférence refroidis par liquide, disposés au-dessus et/ou au-dessous du ruban de verre (5).
